Europäisches Patentamt

European Patent Office

Office européen des brevets

(19)

(11) Numéro de publication : **0 150 682**
**B1**

(12) **FASCICULE DE BREVET EUROPÉEN**

(45) Date de publication du fascicule du brevet :
07.09.88

(51) Int. Cl.⁴ : **G 02 B 6/38**, G 02 B 7/20,
G 01 B 11/27

(21) Numéro de dépôt : 84810662.1

(22) Date de dépôt : 28.12.84

(54) Dispositif pour aligner des composants optiques.

(30) Priorité : 02.02.84 FR 8401735

(43) Date de publication de la demande :
07.08.85 Bulletin 85/32

(45) Mention de la délivrance du brevet :
07.09.88 Bulletin 88/36

(84) Etats contractants désignés :
AT BE CH DE FR GB IT LI LU NL SE

(56) Documents cités :
DE-B- 2 453 413
IBM TECHNICAL DISCLOSURE BULLETIN, vol. 20,
no. 6, November 1977, page 2168, New York, US; S.E.
BOCZULAK et al.: "Optical alignment adjustment
mechanism"

(73) Titulaire : FONDATION SUISSE POUR LA RECHER-
CHE EN MICROTECHNIQUE
Rue Jaquet-Droz 7
CH-2000 Neuchâtel 7 (CH)

(72) Inventeur : Schwab, Philippe
Moulins 56B
1400 Yverdon (CH)
Inventeur : Genequand, Pierre
Rue Moillebeau 25
1209 Geneve (CH)

(74) Mandataire : Nithardt, Roland
CABINET ROLAND NITHARDT Rue Edouard Verdan
15
CH-1400 Yverdon-les-Bains (CH)

## Description

La présente invention concerne un dispositif pour aligner une première pièce telle que par exemple un composant optique par rapport à une seconde pièce, telle que par exemple un autre composant optique, comportant un bâti portant un premier support sur lequel est montée ladite première pièce et un second support sur lequel est montée ladite seconde pièce, ainsi que des organes agencés pour permettre un déplacement relatif de ces supports, dans lequel le premier support est relié au bâti par l'intermédiaire de deux lames allongées, flexibles dans une première direction perpendiculaire à leur axe longitudinal, et montées parallèlement entre elles de manière à permettre un déplacement en translation dudit premier support selon la première direction, dans lequel le second support est relié au bâti par l'intermédiaire de deux autres lames allongées, flexibles dans une seconde direction perpendiculaire à leur axe longitudinal et à la première direction, et montées parallèlement entre elles, de manière à permettre un déplacement en translation dudit second support selon la seconde direction, et dans lequel l'un au moins des deux supports comporte des moyens pour permettre une accommodation relative des surfaces de contact planes des deux pièces.

On utilise en laboratoire différents systèmes destinés à aligner de façon temporaire deux composants optiques, notamment deux fibres optiques, une source de lumière et une fibre optique, ou un détecteur et une fibre optique etc. Toutefois, le montage industriel de ces composants nécessite souvent que l'alignement soit suivi d'une opération de fixation permanente de la position, ne perturbant pas le réglage obtenu.

La présente invention se propose de réaliser un dispositif tel que mentionné ci-dessus, permettant la mise en contact suivie du positionnement précis et relatif selon deux axes orthogonaux situés dans le plan de contact, de deux pièces à assembler d'une manière permanente.

Dans ce but, le dispositif selon l'invention est caractérisé en ce que l'un au moins des deux supports se compose de deux éléments dont l'un supporte la pièce correspondante et dont l'autre est fixé aux extrémités libres des lames allongées flexibles reliant ce support au bâti, ces deux éléments étant rendus solidaires l'un par rapport à l'autre par au moins trois lames de ressort disposées sensiblement dans le plan de contact des deux pièces à assembler, selon trois directions non concourantes, de façon à former un assemblage dans lequel la pièce correspondante ne peut subir aucune rotation autour d'un axe perpendiculaire au plan de contact, mais peut pivoter autour de droites disposées dans ce plan, équivalent ainsi à une membrane d'accommodation, permettant la mise en contact des deux pièces prépositionnées proches l'une de l'autre, suivie du positionnement relatif désiré par glissement selon le plan de contact, le contact étant maintenu durant tout le processus jusqu'à la fixation permanente des deux pièces.

Selon une forme de réalisation préférée de l'invention, l'un des éléments est logé à l'intérieur d'un évidement ménagé dans l'autre élément.

L'élément intérieur et l'élément extérieur ont de préférence une forme annulaire et sont disposés concentriquement l'un par rapport à l'autre.

Afin que l'ensemble soit aussi compact que possible, c'est-à-dire que l'espace entre les deux éléments soit réduit au minimum, tout en assurant cependant une souplesse d'accommodation suffisamment grande, les lames de ressort sont avantageusement disposées sensiblement tangentiellement à l'élément annulaire, chaque lame de ressort ayant une de ses extrémités solidaire de l'un des éléments et l'autre extrémité solidaire de l'autre élément. Cette disposition permet de loger des lames de ressort relativement allongées, donc souples, dans un espace annulaire de faible largeur.

Les lames de ressort sont de préférence au nombre de quatre et régulièrement distribués autour de l'élément intérieur, en formant les côtés d'un carré entourant approximativement cet élément. Ces lames sont avantageusement surélevées par rapport à la surface des deux éléments auxquels elles sont fixées, de manière à se trouver dans le plan de contact des pièces à assembler, sans pour autant que lesdits éléments se touchent.

Les moyens pour permettre une accommodation relative des surfaces de contact des deux pièces comportent de préférence, en plus desdites lames de ressorts souples, au moins un ressort tendant à plaquer les surfaces de contact des deux pièces l'une contre l'autre et à les maintenir dans cette position relative.

Les moyens de fixation de l'une des pièces comportent avantageusement des mâchoires d'étau, sollicitées l'une vers l'autre par des organes ressorts.

L'autre pièce est de préférence montée d'une manière amovible mais rigide sur le second support. A cet effet, ledit second support comporte avantageusement des moyens de fixation rapide, tels que par exemple un organe de blocage coulissant.

La présente invention sera mieux comprise en référence à la description d'un exemple de réalisation et du dessin annexé dans lequel :

La fig. 1 représente une vue en perspective de l'appareil selon l'invention,

La fig. 2 représente une vue de dessus illustrant une partie du bâti, et le premier support portant la première pièce à assembler,

La fig. 3 représente une vue en plan du premier support portant la pièce correspondante,

La fig. 4 représente une vue en coupe selon la ligne A-A du dispositif illustré par la fig. 3,

La fig. 5 représente une vue en plan du second support portant l'autre pièce à assembler, et

La fig. 6 représente une vue en coupe selon la ligne B-B du second support illustré par la fig. 5.

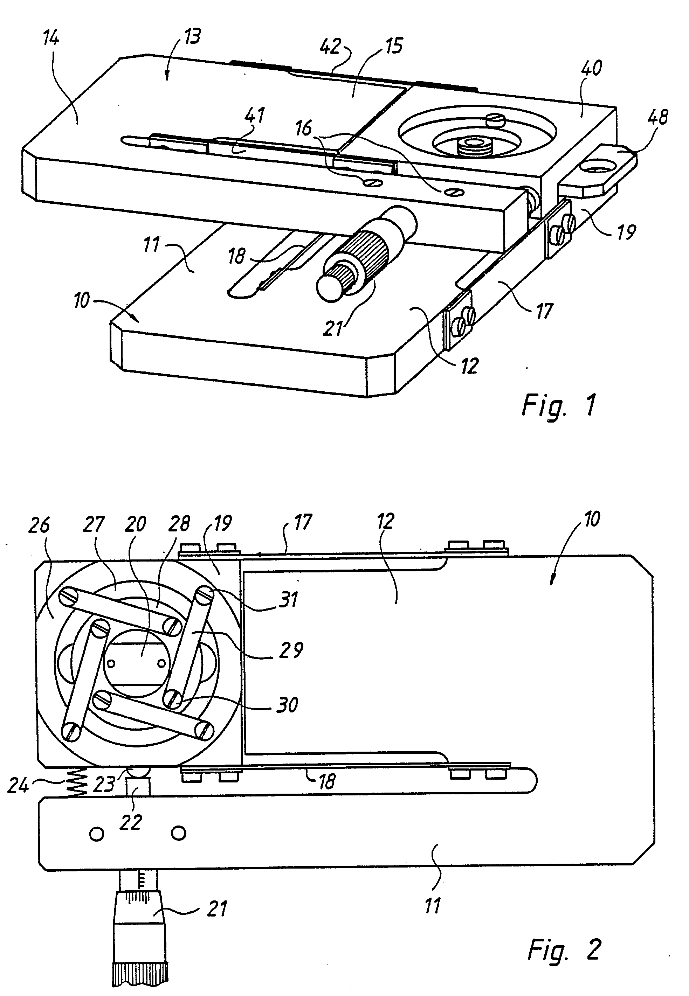

En référence aux figures, et notamment à la fig. 1, l'appareil tel que décrit comporte un bâti composé d'une première plaque de base 10 comprenant deux branches 11 et 12 sensiblement parallèles entre elles et d'une seconde plaque de base 13 composée de deux branches 14 et 15 sensiblement parallèles entre elles. Les deux plaques de base 10 et 13 sont liées l'une à l'autre par des vis 16.

La branche 12 porte, comme le montre plus particulièrement la fig. 2, deux lames parallèles 17 et 18, flexibles selon une direction perpendiculaire à leur axe longitudinal. Comme le premier support 19 portant la première pièce à assembler 20 est fixé aux extrémités desdites lames 17 et 18, ces deux lames 17 et 18 forment pour le support 19 et la pièce correspondante 20, un module à déformation purement élastique qui permet un déplacement de faible amplitude en translation de la pièce 20 selon un axe perpendiculaire auxdites lames 17 et 18. Ce déplacement peut être assuré par un dispositif à vis micrométrique 21 dont l'extrémité de la tige 22 est en appui contre une butée 23 solidaire du support 19. Un ressort de rappel 24 assure l'appui permanent de la tige 22 sur la butée 23.

Le support 19 se compose en fait de deux éléments dont l'un 26, appelé par la suite élément extérieur, comporte un évidement central 27 dans lequel est au moins partiellement logé le second élément 28 appelé par la suite élément intérieur. Ces deux éléments sont de préférence disposés de manière concentrique. Les deux éléments 26 et 28 sont rendus solidaires l'un de l'autre par quatre lames 29 dont l'une des extrémités est fixée au moyen d'une vis 30 ou de tout autre moyen approprié, sur la surface de l'élément 28, et dont l'autre extrémité est fixée au moyen d'une vis 31 ou de tout autre moyen approprié, sur un épaulement périphérique ménagé dans l'élément 26 en bordure de l'évidement central 27. Les lames 29 sont de préférence disposées en carré de manière à encadrer ladite première pièce 20 logée dans un évidement central approprié ménagé dans l'élément 28. Ces lames sont avantageusement surélevées par rapport à la surface des deux éléments auxquels elles sont fixées, par exemple au moyen de rondelles interposées entre elles et les surfaces d'appui. Les vis 30 et 31 étant serrées à fond de manière à bloquer les extrémités correspondantes des lames 29, la pièce 20 solidaire de l'élément 28 ne peut subir aucune rotation autour d'un axe perpendiculaire au plan de la surface de contact de l'autre pièce. Par contre, cette surface peut pivoter autour de droites disposées dans ce plan, le mécanisme étant équivalent à une rotule permettant d'effectuer des déplacements de faible amplitude, sans aucun jeu dans le plan de contact.

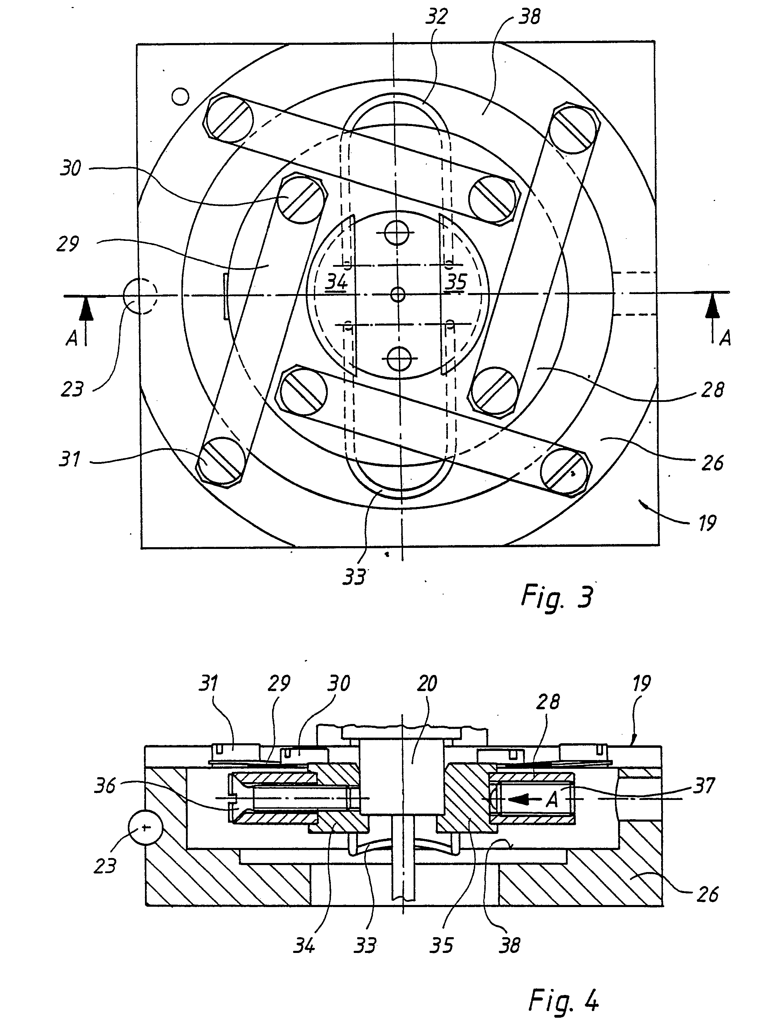

En référence aux figures 3 et 4, la première pièce 20, constituée par exemple par une source de lumière telle qu'une diode photoluminescente logée dans son boîtier, est retenue par deux mors 34 et 35 d'un étau, montés en opposition sur l'élément intérieur 28 du premier support 19. Le mors 34 est fixé rigidement à l'élément 28 par une vis de fixation 36. Le mors 35, par contre, est mobile radialement. Une vis à bille 37 ou tout autre organe similaire, le repousse dans le sens de la flèche A, en appui contre la surface en regard de la pièce 20.

Deux ressorts 32 et 33 ayant la forme d'arceaux comportent chacun deux branches dont les extrémités sont respectivement solidaires des deux mors 34 et 35. Les parties courbes des deux ressorts 32 et 33 sont en appui contre le rebord 38 d'un épaulement annulaire intérieur ménagé le long du bord intérieur de l'élément 26.

Les ressorts 32 et 33 ont pour but de solliciter les deux surfaces de contact des deux pièces à assembler l'une contre l'autre et de maintenir les mors 34 et 35 dans leur position en l'absence de la pièce 20.

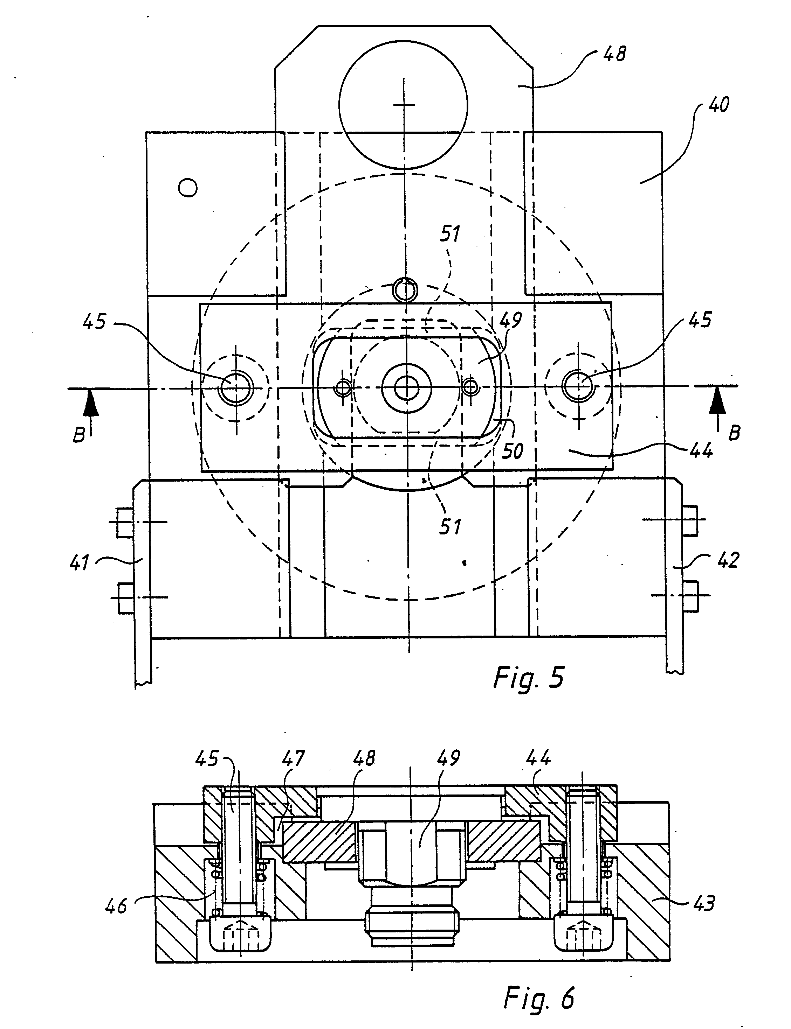

En référence aux figures 5 et 6, le second support 40 fixé aux extrémités des lames flexibles 41 et 42 reliées à la branche 15 de la plaque de base 13, se compose d'un bloc de base 43 et d'un chevalet 44 assemblés au moyen de vis 45 et de ressorts de compression 46 de forme hélicoïdale, disposés autour des vis 45. Ces deux éléments définissent un couloir de guidage 47 dans lequel est disposé un tiroir 48 agencé pour assurer le blocage en position de la seconde pièce 49 qui est, par exemple, l'embase d'un connecteur, destiné à être associé à la source de lumière qui constitue la première pièce définie précédemment. Le chevalet 44 est pourvu d'une ouverture centrale 50 et comporte deux épaulements latéraux 51 pour assurer la fixation de l'embase du connecteur 49. Ces différents organes permettent la fixation rapide de la seconde pièce 49 qui est bloquée en position par rapport au support correspondant.

Pour amener les deux pièces à assembler dans leurs positions relatives optimales, l'opérateur agit sur les vis micrométriques ou sur tout autre mécanisme approprié permettant d'obtenir le même effet, pour assurer le déplacement de ces pièces dans leur plan de contact. L'accommodation de leurs surfaces de contact s'effectue automatiquement grâce aux lames 29 et aux ressorts 32 et 33 décrits précédemment, qui constituent une rotule à faible course.

Dans la pratique, la source et l'embase sont logées dans leurs boîtiers respectifs, et préassemblées à l'aide de vis, mises en place, mais non serrées. Le prépositionnement des pièces est ainsi assuré, et il subsiste un jeu suffisant pour permettre une optimalisation de la transmission de puissance entre la source et l'embase.

Le tiroir étant ouvert, les deux pièces prémontées sont glissées par l'arrière du bâti jusque dans une position dans laquelle le boîtier de la source prend appui contre le fond des mors de l'étau, et où l'embase prend appui contre les épaulements latéraux 51 représentés par la fig. 5. Le tiroir est ensuite refermé. Il présente une courbure qui soulève le chevalet par l'intermédiaire de l'embase, se glisse sous ce chevalet et de ce fait exerce une pression sur l'embase qui est ainsi bloquée en position entre le chevalet et le tiroir.

On peut alors alimenter la source et connecter la fibre de manière à pouvoir détecter la puissance transmise par la source à cette fibre. On optimise le réglage par déplacement relatif des deux pièces, puis on bloque les vis d'assemblage. Le tiroir peut alors être retiré, ce qui a pour effet d'éjecter les deux pièces assemblées, grâce à la pression exercée par les ressorts 46, 32 et 33.

La présente invention n'est pas limitée aux formes de réalisation décrites, mais peut subir différentes modifications et se présenter sous diverses variantes évidentes pour l'homme de l'art.

**Revendications**

1. Dispositif pour aligner une première pièce telle que par exemple un composant optique par rapport à une seconde pièce telle que par exemple un autre composant optique, comportant un bâti portant un premier support sur lequel est montée ladite première pièce et un second support sur lequel est montée ladite seconde pièce, ainsi que des organes agencés pour permettre un déplacement relatif de ces supports, dans lequel le premier support est relié au bâti par l'intermédiaire de deux lames allongées flexibles dans une première direction perpendiculaire à leur axe longitudinal, et montées parallèlement entre elles, de manière à permettre un déplacement en translation dudit premier support selon la première direction, dans lequel le second support est relié au bâti par l'intermédiaire de deux autres lames allongées, flexibles dans une seconde direction perpendiculaire à leur axe longitudinal et à la première direction, et montées parallèlement entre elles, de manière à permettre un déplacement en translation dudit premier support selon la première direction, dans lequel le second support est relié au bâti par l'intermédiaire de deux autres lames allongées, flexibles dans une seconde direction perpendiculaire à leur axe longitudinal et à la première direction, et montées parallèlement entre elles, de manière à permettre un déplacement en translation dudit second support selon la seconde direction, et dans lequel l'un au moins des deux supports comporte des moyens pour permettre une accommodation relative des surfaces de contact des deux pièces, caractérisé en ce que l'un (19) au moins des deux supports se compose de deux éléments (26, 28) dont l'un (28) supporte la pièce correspondante (20) et dont l'autre (26) est fixé aux extrémités libres des lames allongées flexibles (17, 18) reliant ce support (19) au bâti (10), ces deux éléments étant rendus solidaires l'un par rapport à l'autre par au moins trois lames de ressort (29) disposées sensiblement dans le plan de contact des deux pièces à assembler, selon trois directions non concourantes, de façon à former un assemblage dans lequel la pièce correspondante ne peut subir aucune rotation autour d'un axe perpendiculaire au plan de contact, mais peut pivoter autour de droites disposées dans ce plan, équivalent ainsi à une membrane d'accommodation permettant la mise en contact des deux pièces prépositionnées proches l'une de l'autre, suivie du positionnement relatif désiré par glissement selon le plan de contact, le contact étant maintenu durant tout le processus jusqu'à la fixation permanente des deux pièces.

2. Dispositif selon la revendication 1, caractérisé en ce que l'un (28) des éléments est logé à l'intérieur d'un évidement ménagé dans l'autre élément (26).

3. Dispositif selon la revendication 2, caractérisé en ce que les deux éléments (26, 28) ont une forme annulaire et sont disposés concentriquement l'un par rapport à l'autre.

4. Dispositif selon la revendication 3, caractérisé en ce que les lames de ressort (29) sont disposées tangentiellement à l'élément annulaire intérieur, chacune d'elle ayant une de ses extrémités solidaire de l'un des éléments et l'autre extrémité solidaire de l'autre élément.

5. Dispositif selon la revendication 1, caractérisé en ce que les lames de ressort (29) sont surélevées par rapport à la surface des deux éléments auxquels elles sont fixées, de manière à se trouver dans le plan de contact des pièces à assembler sans que les éléments se touchent.

6. Dispositif selon la revendication 3, caractérisé en ce que les lames de ressort (29) sont au nombre de quatre, disposées en carré, et entourant approximativement l'élément intérieur.

7. Dispositif selon la revendication 1, caractérisé en ce que les moyens pour permettre une accommodation relative des surfaces de contact des deux pièces comportent en plus desdites lames de ressorts souples (29), au moins un ressort d'appui (32, 33) tendant à plaquer les surfaces de contact des deux pièces (20, 49) l'une contre l'autre et à les maintenir dans cette position relative.

8. Dispositif selon la revendication 7, dans lequel l'un des éléments est logé à l'intérieur d'un évidement ménagé dans l'autre élément, caractérisé en ce que ledit ressort d'appui est constitué par deux ressorts (32, 33) en forme d'arceaux dont la partie arrondie prend appui contre un rebord annulaire de l'élément extérieur (26) et dont les extrémités sont liées à deux mors (34, 35) d'un étau solidaire de l'élément intérieur (28) et destiné à fixer ladite première pièce (20).

9. Dispositif selon la revendication 1, caractérisé en ce que seulement l'une des pièces est supportée de façon souple sur un support à deux éléments, comme défini dans la revendication 1, et l'autre pièce (49) est fixée de façon rigide sur l'autre support.

10. Dispositif selon la revendication 9, caractérisé en ce que ladite autre pièce (49) est maintenue rigidement en position sur l'autre support par un organe de blocage coulissant (48).

**Claims**

1. Device for aligning a first member such as, for example, an optical component with respect to a second member such as, for example, another optical component, comprising a frame carrying a first support on which said first member is mounted and a second support on which said second member is mounted, as well as means for moving said two supports relatively to each other, said first support being connected to the frame by means of two elongated strips which are flexible in a first direction perpendicular to their longitudinal axis and which are arranged parallel to each other, thereby permitting a translational movement of said first support in the first direction, the second support being connected to the frame by means of two other elongated strips which are flexible in a second direction perpendicular to their longitudinal axis and to the first direction and arranged parallel to each other as to permit a translational movement of said second support according to the second direction, at least one of said two supports comprising means for relative adjustment of two plane contact surfaces of said two members, characterized in that at least one (19) of said two supports is composed of two elements (26, 28) one (28) of which carrying the corresponding member (20) and the other one (26) being fixed to the free ends of the flexible elongated strips (17, 18) which connect said support (19) to the frame (10), these two elements being connected to each other by means of at least three spring strips (29) which are arranged essentially in the contact plane of the two members to be aligned and along three non-converging directions, thereby forming an assembly in which the corresponding member is rigid around a direction perpendicular to said plane but flexible around straight lines of said planes and which is equivalent to an accomodation membrane permitting contacting of the two closely to each other prepositioned members and the subsequent desired relative positioning by displacement along the contact plane, contact being maintained during the entire process until the two members are fixed permanently with respect to each other.

2. Device according to claim 1, characterized in that one (28) of said elements is located within a hole of the other element (26).

3. Device according to claim 2, characterized in that the two elements (26, 28) have an annular shape and are disposed in concentric relationship to each other.

4. Device according to claim 3, characterized in that the spring strips (29) are disposed tangentially to the inner annular element, each of said strips having one end connected to one of said elements and the other end connected to the other element.

5. Device according to claim 1, characterized in that the spring strips (29) are raised above the surface of the two elements to which they are connected, so as to be located in the contact plane of the two members to be aligned, without said two elements touching each other.

6. Device according to claim 3, characterized in that the spring strips (29) are four in number, arranged in square and surrounding approximatively the inner element.

7. Device according to claim 1, characterized in that the means for relative adjustment of the contact surfaces of the two members comprises, in addition to said flexible spring strips (29), at least one pressure spring (32, 33) for urging the contact surfaces of the two members (20, 49) against each other and for maintaining them in this relative position.

8. Device according to claim 7, in which one element is located within a hole of the other element, characterized in that said pressure spring is constituted by two bowed springs (32, 33) the round portion of which abuts on an annular edge of the outer element (26) and the ends of which are fastened to two jaws (34, 35) of a vice integral with the inner element (28) for fixing said first member (20).

9. Device according to claim 1, characterized in that only one of the members is flexibly supported on a support having two elements, as defined in claim 1, and the other member (49) is rigidly fixed on the other support.

10. Device according to claim 9, characterized in that said other member (49) is rigidly maintained in its position on the other support by sliding bolt means (48).

**Patentansprüche**

1. Vorrichtung zum Ausrichten von einem ersten Bestandteil wie zum Beispiel einem optischen Bestandteil gegenüber einem anderen Bestandteil wie zum Beispiel einem weiteren optischen Bestandteil, bestehend aus einem Gestell, das eine erste Auflage trägt, auf der der erste Bestandteil angeordnet ist, und eine zweite Auflage, auf der der zweite Bestandteil angeordnet ist, sowie aus Teilen, die eingerichtet sind, um eine verhältnismäßige Verstellung von diesen Auflagen zu ermöglichen, in der die erste Auflage mit dem Gestell mit Hilfe von zwei langgezogenen Blättern, die in eine erste Richtung biegsam sind, die senkrecht zu ihrer Mittellinie in Längsrichtung ist, und untereinander derart nebeneinander angeordnet sind, daß eine Verstellung als geradlinige Bewegung von der ersten Auflage nach der ersten Richtung möglich ist, in der die zweite Auflage mit dem Gestell mit Hilfe von zwei weiteren langgezogenen Blättern, die in eine zweite Richtung biegsam sind, die senkrecht zu ihrer Mittellinie in Längsrichtung und zu der ersten Richtung ist, und untereinander derart nebeneinander angeordnet sind, daß eine Verstellung als geradlinige Bewegung von der zweiten Auflage nach der zweiten Richtung möglich ist, und in dem mindestens eine von den beiden Auflagen Einrichtungen enthält, um eine verhältnismäßige Anpassung der Oberflächen für die Berührung der beiden Bestandteile zu ermöglichen, dadurch gekennzeichnet, daß mindestens eine (19) von den beiden Auflagen aus zwei Teilen (26, 28) besteht, wobei der eine Teil (28) den entsprechenden Bestandteil (20) trägt und der andere Teil (26) an den freien Enden von den langgezogenen biegsamen Blättern (17, 18) befestigt ist, die diese Auflage (19) mit dem Gestell (10) verbinden, wobei diese beiden Teile miteinander durch mindestens drei Federblätter (29) verbunden sind, die im wesentlichen in der Ebene der Berührung der beiden Teile angeordnet sind, die gemäß drei nicht zusammenlaufenden Richtungen zusammenzubringen sind, um einen Verband zu bilden, in dem der entsprechende Bestandteil keine Drehung um eine Achse, die senkrecht zu der Ebene der Berührung ist, vollziehen kann, jedoch um Geradlinien, die in dieser Ebene angeordnet sind, schwanken kann, wobei dieser Verband somit einer Membrane für eine Anpassung gleicht, die das Inberührungbringen von zwei Bestandteilen ermöglicht, die vorher nebeneinander in Stellung gebracht werden, mit nachfolgendem Bringen in die verhältnismäßige gewünschte Stellung durch Gleiten gemäß der Ebene von der Berührung, wobei die Berührung für die Dauer von dem Vorgang bis zu der dauerhaften Befestigung der beiden Bestandteile aufrechterhalten bleibt.

2. Vorrichtung gemäß Anspruch 1, dadurch gekennzeichnet, daß der eine (28) der Teile in einer Aussparung gelagert ist, die in dem anderen Teil (26) ausgeführt ist.

3. Vorrichtung gemäß Anspruch 2, dadurch gekennzeichnet, daß die beiden Teile (26, 28) eine ringförmige Gestalt haben und konzentrisch zueinander angeordnet sind.

4. Vorrichtung gemäß Anspruch 3, dadurch gekennzeichnet, daß die Federblätter tangential zu dem inneren ringförmigen Teil angeordnet sind, wobei das eine Ende von jedem Federblatt mit dem einen der Teile und das andere Ende von jedem Federblatt mit dem anderen der Teile verbunden ist.

5. Vorrichtung gemäß Anspruch 1, dadurch gekennzeichnet, daß die Federblätter (29) gegenüber der Oberfläche der beiden Teile, an denen sie befestigt sind, derart überhöht sind, daß sie sich in der Ebene der Berührung der Bestandteile befinden, die zusammenzubringen sind, ohne daß die Teile sich berühren.

6. Vorrichtung gemäß Anspruch 3, dadurch gekennzeichnet, daß eine Anzahl von vier Federblättern vorgesehen ist, die als Quadrat angeordnet sind und annähernd den inneren Teil umgeben.

7. Vorrichtung gemäß Anspruch 1, dadurch gekennzeichnet, daß die Einrichtungen, die eine verhältnismäßige Anpassung der Oberflächen für die Berührung der beiden Bestandteile ermöglichen, zusätzlich zu den biegsamen Federblättern (29) mindestens eine Feder für eine Abstützung (32, 33) enthalten, die danach strebt, die Oberflächen für die Berührung der beiden Bestandteile (20, 49) gegeneinander zu pressen und sie in dieser verhältnismäßigen Stellung zu halten.

8. Vorrichtung gemäß Anspruch 7, in der einer der Teile in einer Aussparung gelagert ist, die in dem anderen Teil ausgeführt ist, dadurch gekennzeichnet, daß die Feder für eine Abstützung aus zwei Federn (32, 33) in der Gestalt von Bögen besteht, wobei von diesen Federn in der Gestalt von Bögen der gerundete Teil sich gegen einen ringförmigen Rand von dem äußeren Teil (26) abstützt und die Enden mit zwei Backen (34, 35) von einem Kloben verbunden sind, der mit dem inneren Teil (28) fest verbunden ist und dafür bestimmt ist, den ersteren Bestandteil (20) festzuhalten.

9. Vorrichtung gemäß Anspruch 1, dadurch gekennzeichnet, daß nur einer der Bestandteile auf einer biegsamen Weise auf einer Auflage mit zwei Teilen gemäß der Beschreibung in dem Anspruch 1 angeordnet ist und der andere Bestandteil (49) auf einer starren Weise auf der anderen Auflage befestigt ist.

10. Vorrichtung gemäß Anspruch 9, dadurch gekennzeichnet, daß der andere Bestandteil (49) durch ein gleitendes Klemmstück (48) auf der anderen Auflage starr in Stellung gehalten wird.

Fig. 1

Fig. 2

Fig. 3

Fig. 4

Fig. 5

Fig. 6